# EUROPÄISCHE PATENTSCHRIFT

(11) **EP 2 025 952 B1**
(45) Veröffentlichungstag und Bekanntmachung des Hinweises auf die Patenterteilung: **14.03.2012**
(21) Anmeldenummer: 08014338.1
(22) Anmeldetag: 12.08.2008
(51) Int. Cl.: F16B 13/12

(54) **Spreizdübel**
Expansion anchor
Piton à expansion

(30) Priorität: 17.08.2007 DE 102007040368
(43) Veröffentlichungstag der Anmeldung: 18.02.2009
(73) Patentinhaber: Würth International AG, 7000 Chur (CH)
(72) Erfinder: Wieland, Achim, 74211 Leingarten (DE); Küenzlen, Jürgen, Dr., 71570 Oppenweiles (DE)
(74) Vertreter: Patentanwälte Ruff, Wilhelm, Beier, Dauster & Partner

(56) Entgegenhaltungen:
- EP-A- 0 400 535
- EP-A- 1 248 000
- DE-A1- 19 528 689

## Beschreibung

Die Erfindung geht aus von einem Spreizdübel, insbesondere einem Spreizdübel aus Kunststoff. Solche Spreizdübel, die manchmal auch als Rahmendübel bezeichnet werden, dienen dazu, Gegenstände an dem Untergrund, also beispielsweise Mauerwerk, Beton oder dergleichen zu befestigen. Sie haben daher einen vorderen Spreizbereich, der in den Untergrund eingreift, und einen in dem zu befestigenden Gegenstand angeordneten hülsenartigen Bereich, der sich nicht aufspreizt. Da solche Dübel auch an Außenfassaden verwendet werden, müssen sie bestimmte Anforderungen an Haltbarkeit erfüllen. Das wichtigste Kriterium ist die Korrosionsbeständigkeit. Dabei geht man davon aus, dass der im Mauerwerk vorhandene Teil des Dübels durch die Anpressung an das Mauerwerk gegen das Eindringen von Feuchtigkeit geschützt ist, so dass die dort im Spreizbereich vorhandenen Öffnungen nicht stören. Der in dem zu befestigenden Element vorhandene Hülsenbereich ist allseits geschlossen, so dass dort Wasser nicht zu dem metallischen Aufspreizelement vordringen kann. Der Hülsenbereich muss bis mindestens in die Trennfläche zwischen dem zu befestigenden Gegenstand und dem Mauerwerk reichen.

Die Festigkeit einer Befestigung eines Gegenstands an einem Mauerwerk hängt unter anderem von der Eindringtiefe des Dübels in das Mauerwerk ab. Darüber hinaus gibt es unterschiedlich dicke zu befestigende Gegenstände. Möchte man mit möglichst wenigen Größen von Dübeln auskommen, und die unterschiedlichen Gegebenheiten berücksichtigen, muss man immer das Bohrloch für den größten Dübel bohren. Denn der nicht gegen Eindringen von Flüssigkeit geschützte Spreizbereich, der ja Öffnungen aufweist, muss immer in dem Mauerwerk sitzen. Das Bohren des Bohrlochs ist aber eine zeitaufwändige Tätigkeit. Reicht die geringere Setztiefe, kann bei gleichem zu befestigenden Bauteil ein kürzerer Dübel verwendet werden.

Lässt man es zu, dass ein Teil des Spreizbereichs nicht innerhalb des Mauerwerks angeordnet ist, muss man sehr hochwertige Materialien für die Spreizschraube oder den Spreiznagel verwenden. Dies verteuert die Anwendung der Dübel wiederum.

Bei einem bekannten aus Kunststoff gespritzten Rahmendübel, der zwei durch Längsschlitze getrennte Spreizschenkel aufweist, ist vorgesehen worden, die Längsschlitze im Bereich ihres dem Hülsenabschnitt zugewandten Endes durch von der Außenseite des Dübels ausgehenden Nuten mitabnehmender Tiefe fortzusetzen. Dadurch soll ein fließender Übergang zwischen dem Spreizbereich und dem Hülsenbereich geschaffen werden (DE 19528689).

Weiterhin ist ein Dübel bekannt, der einen Spreizabschnitt mit Längsschlitzen aufweist. Die Längsschlitze sind an einigen Stellen durch quer verlaufende Stege miteinander verbunden. In montiertem Zustand ist ein Teil des Spreizabschnitts noch außerhalb des Mauerwerks angeordnet (EP 1248000 A1).

Weiterhin ist ein Befestigungselement bestehend aus einer Schraube und einem Dübel bekannt. Der Dübel ist in seinem vorderen Bereich zur Bildung von aufspreizbaren Elementen geschlitzt, ebenso in seinem äußeren Bereich, von dem aus die Schraube eingeschraubt wird (EP 0400535 A2).

Der Erfindung liegt die Aufgabe zu Grunde, einen Dübel zu schaffen, der für unterschiedliche Setztiefen in gleicher Weise vorteilhaft verwendet werden kann.

Zur Lösung dieser Aufgabe schlägt die Erfindung einen Dübel mit den im Anspruch 1 genannten Merkmalen vor. Der Dübel enthält also einen Hülsenbereich, der dem äußeren Ende des Dübels entspricht. Dieser Hülsenbereich ist in montiertem Zustand des Dübels im wesentlichen vollständig außerhalb des Untergrunds, also beispielsweise des Mauerwerks angeordnet, also beispielsweise innerhalb des anzubringenden Gegenstands. In seinem vorderen Bereich enthält der Dübel einen Spreizbereich, der in montiertem Zustand des Dübels vollständig innerhalb des Untergrunds angeordnet ist. Zwischen den beiden Bereichen ist ein Zwischenabschnitt gebildet, der so ausgebildet ist, dass er als Spreizbereich verwendet werden kann, der aber andererseits auch so ausgebildet ist, dass er außerhalb des Mauerwerks angeordnet werden kann und dann für die Korrosionsbeständigkeit der Befestigung sorgt.

Diese Korrosionsbeständigkeit in dem Zwischenabschnitt kann auf unterschiedliche Weisen erreicht werden. Eine Möglichkeit besteht darin, dass man die Schraube oder den Nagel, der zum Aufweiten des Dübels dient, in diesem Bereich mit einer korrosionsbeständigen Beschichtung versieht. Hierzu eignet sich beispielsweise eine Zinklamellenbeschichtung. Dann braucht nicht die gesamte Schraube oder der gesamten Nagel aus sehr hochwertigem Material zu bestehen, sondern es reicht das übliche weniger hochwertige Material aus, das nur in diesen Bereich beschichtet wird.

Eine andere Möglichkeit besteht darin, dass man den Zwischenabschnitt zwar wie einen Spreizbereich ausbildet, die in einem normalen Spreizbereich aber vorhandenen Öffnungen durch dünnes Material verschließt, so dass der Zwischenabschnitt wasserdicht ausgebildet ist. Das Material kann so eingestellt werden, dass es dann, wenn dieser Bereich gespreizt wird, sich dehnt, ohne zu zerreißen.

Eine andere Möglichkeit besteht darin, die Öffnungen des Zwischenabschnitts mit flexiblem, balgartigem oder gefaltetem Material zu verschließen, wodurch sich ebenfalls eine Wasserdichtigkeit ergibt. Dieses flexible oder gefaltete Material kann sich dann beim Aufspreizen entfalten, was dann ebenfalls zu der Möglichkeit des Aufspreizen es führt.

Eine weitere Möglichkeit besteht darin, die Öffnungen durch elastisches und dehnbares Material zu verschließen, bei dem es sich beispielsweise um ein anderes Material handeln kann. Während der Dübel eher aus härterem Material besteht, kann man zum Verschließen der Öffnungen im Zwischenabschnitt weiches Material verwenden, dass sich leicht dehnen lässt.

Insbesondere kann der vordere Spreizbereich genauso ausgebildet sein wie der Zwischenabschnitt, natürlich mit Ausnahme der die Öffnungen verschließende Materialien.

Insbesondere kann der Spreizbereich des Dübels mehrere durch Längsschlitze getrennte Spreizschenkel aufweisen, die an ihrer Außenseite insbesondere mit einer Verrippung versehen sein können, wobei die Rippen quer zur Längsrichtung verlaufen.

Ebenfalls möglich ist es, dass der Spreizbereich einzelne insbesondere dreieckförmige, aus dem Dübel nach außen heraus verformbare Spreizelemente aufweist, so dass eine bessere Anpassung an unterschiedliche Formen der Löcher gegeben ist.

In Weiterbildung der Erfindung kann vorgesehen sein, dass der Dübel zwei Setztiefenmarkierungen aufweist. Die erste Setztiefenmarkierung ist an dem Übergang zwischen dem Hülsenabschnitt und dem Zwischenabschnitt angeordnet, während die zweite Markierung an dem Übergang zwischen dem Zwischenabschnitt und dem vorderen Spreizbereich angeordnet ist. Die Länge des Dübels ist an dem Kopf der Schraube abzulesen. Mit der Dicke des zu befestigenden Bauteils kann damit die Setztiefe des Dübels berechnet werden.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: die Seitenansicht eines von der Erfindung vorgeschlagenen Dübels nach einer ersten Ausführungsform;
- Figur 2: einen Querschnitt durch den Dübel der Figur 1 längs Linie II-II in Figur 1;
- Figur 3: eine der Figur 1 entsprechende Seitenansicht eines Dübels bei einer zweiten Ausführungsform.

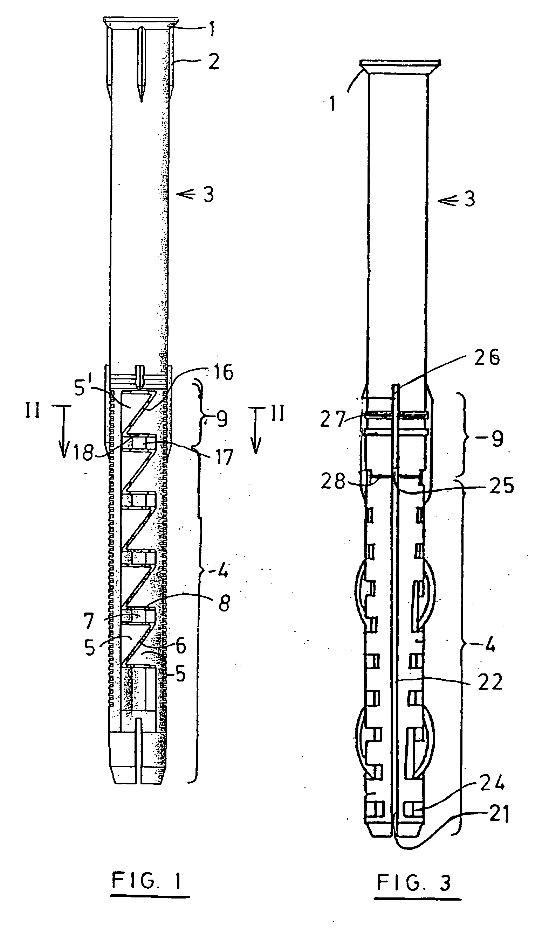

Figur 1 zeigt die Seitenansicht eines von der Erfindung vorgeschlagenen Rahmendübels in einer Seitenansicht. An seinem äußeren Ende enthält der Dübel einen Kragen 1, der die Eindringtiefe in dem zu befestigenden Gegenstand begrenzt. Unterhalb des Kragens 1 enthält der Dübel vier kurze in Längsrichtung verlaufende scharfkantige Rippen 2 zur Verdrehsicherung.

Der Dübel enthält von seinem äußeren Ende, an dem der Kragen 1 angeformt ist, ausgehend einen Hülsenabschnitt 3, in dem der Dübel nicht aufweitbar ist, sondern von einer zylindrischen außen glatten geschlossenen Hülse gebildet wird.

An seinem gegenüberliegenden vorderen Ende enthält der Dübel einen Spreizbereich 4, in dem der Dübel einzelne aus der Dübelhülse nach außen aufklappbare Spreizelemente 5 aufweist. Im dargestellten Beispiel handelt es sich um dreieckförmige Aufspreizelemente, die zahnartig ineinander eingreifen. Sie sind voneinander durch je einen Schlitz 6 getrennt. Zwischen jedem Paar ineinander eingreifender Spreizelemente 5 ist ein Steg 7 gebildet, der von den beiden benachbarten Paaren durch quer zur Längsrichtung des Dübels verlaufende weitere Schlitze 8 getrennt ist. Die Aufspreizung geschieht dadurch, dass durch Einschrauben einer Schraube diese Spreizelemente 5 nach außen aufgeklappt werden.

In einem Zwischenbereich 9 zwischen dem Hülsenbereich 3 und dem Spreizbereich 4 ist ein Zwischenbereich 9 gebildet, der ebenfalls Aufspreizelemente 5 ' aufweist, die zwischen sich eine nutenartige Vertiefung 16 bilden. Hierbei handelt es sich allerdings nicht um einen durchgehenden Schlitz, sondern um eine Vertiefung. Das gleiche gilt für den quer zur Längsrichtung verlaufenden Steg 17, der von dem Paar Aufspreizelemente 5' durch eine Vertiefung 18 getrennt ist.

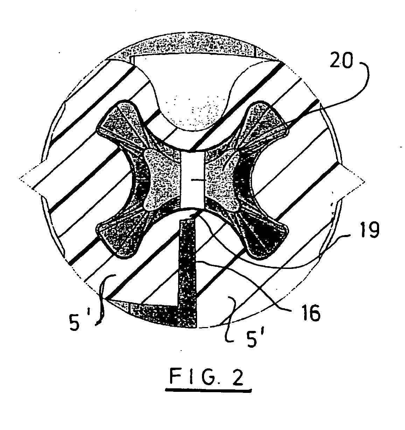

Einen Querschnitt durch diesen Bereich zeigt die Figur 2. In dem Querschnitt ist die in der Seitenansicht der Figur 1 schräg verlaufende Vertiefung 16 als schmaler Einschnitt zu sehen, dessen Boden durch eine schmale Verbindung 19 zwischen den beiden Spreizelementen 5' gebildet wird.

Ein Querschnitt durch den Spreizbereich 4 durch ein dort vorhandenes Paar von Spreizelementen 5 sieht dann genauso aus mit Ausnahme des Fehlens des Verbindungselements 19. An dieser Stelle geht also der schräge Schlitz 6 bis in den Innenraum 20 des Dübels hindurch.

Der Zwischenabschnitt 9 ist also aufgebaut wie ein Spreizbereich, ist aber durch das Vorsehen der an der Innenseite der Dübelhülse vorhandenen Verbindungen 19 nach außen hin wasserdicht abgeschlossen. Wenn dieser Bereich innerhalb des zu befestigenden Gegenstands angeordnet ist, wird er nicht aufgeweitet, sondern bleibt wasserdicht, so dass kein Wasser zu der Schraube gelangen kann.

Wird er dagegen in dem Mauerwerk selbst angeordnet und dort durch die Schraube aufgeweitet, so reißen die schmalen Verbindungen 19 nach einem anfänglichen Dehnen auf, so dass sie das Aufklappen der Aufspreizelemente 5' nicht mehr behindern. Der Zwischenabschnitt verhält sich in diesem Fall also wie der Spreizbereich 4 und bildet eine Fortsetzung von diesem.

Figur 3 zeigt eine Seitenansicht eines weiteren Dübels nach der Erfindung. Auch dieser Dübel dient dazu, einen Gegenstand, beispielsweise einen Fensterrahmen, an einem Mauerwerk zu befestigen. Wiederum enthält der Dübel, ausgehend von einem Kragen 1, einen Hülsenbereich 3, wo er einfach als zylindrisches Rohr ausgebildet ist.

Am gegenüberliegenden Ende bildet der Dübel den Spreizbereich 4, von dessen freien Ende 21 zwei diametral gegenüberliegende Längsschlitze 22 ausgehen. Dieser reichen über die gesamte Länge des Spreizbereichs 4. Sie bilden dadurch im dargestellten Beispiel zwei Spreizschenkel 23, die an ihrer Außenseite Rücksprünge 24 aufweisen können. Von dem Ende 25 der Längsschlitze 22, das das Ende des Spreizbereichs 4 definiert, gehen in Verlängerung der Längsschlitze 22 von der Außenseite der Dübelhülse ausgehende Nuten 26 weiter, die praktisch eine Art Längsschlitz mit einem Boden bilden. Dieser Boden der Nuten 26 bildet einen wasserdichten Verschluss dieses Bereichs nach außen hin. Auf diese Weise wird auch hier ein Bereich 9 gebildet, der einerseits wasserdicht ist, so dass er als Hülsenbereich dienen kann. Andererseits kann bei einem Versuch der Aufspreizung der Boden, der ähnlich dünn ausgebildet ist wie das Verbindungselement 19 aus Figur 2, sich dehnen, so dass der Dübel schon in diesem Bereich aufgespreizt werden kann.

Beide Dübel können in der Weise verwendet werden, dass nur der Spreizbereich 4 in dem Mauerwerk sitzt, während der Hülsenbereich 3 und der Zwischenabschnitt 9 in dem zu befestigenden Gegenstand angeordnet sind. In anderen Fällen können sie aber so in das Mauerwerk eingesetzt werden, dass auch der Zwischenbereich 9 im Mauerwerk sitzt und dort als Aufspreizbereich dient.

In der Seitenansicht des Dübels der Figur 3 ist zu sehen, dass der Dübel am Beginn des Zwischenbereichs 9 eine Setztiefenmarkierung 27 aufweist, sowie an der Trennstelle zwischen dem Zwischenbereich 9 und dem vorderen Spreizbereich 4 eine zweite Setztiefenmarkierung 28. Die Setztiefenmarkierungen erleichtern dem Monteur das Anbringen eines Dübels.

## Patentansprüche

1. Spreizdübel aus Kunststoff, mit
1.1 einem an einem Ende des Dübels angeordneten Hülsenabschnitt (3), der
1.1.1 in montiertem Zustand des Dübels im wesentlichen vollständig außerhalb des Mauerwerks angeordnet ist,
1.2 einem vorderen Spreizbereich (4), der
1.1.2 in montierten Zustand des Dübels im wesentlichen vollständig innerhalb des Mauerwerks angeordnet ist, sowie mit
1.3 einem zwischen dem Hülsenabschnitt (3) und dem vorderen Spreizbereich (4) angeordneten Zwischenabschnitt (9), der
1.3.1 derart ausgebildet ist, dass er sowohl als Spreizbereich wirken als auch außerhalb des Mauerwerks angeordnet sein kann,
**dadurch gekennzeichnet, dass**
1.4 der Spreizdübel ein metallisches Aufspreizelement aufweist, das bei montiertem Dübel mindestens in dem Bereich des Zwischenabschnitts (9) mit einer korrosionsbeständigen Beschichtung, insbesondere einer Zinklamellenbeschichtung, versehen ist, und/oder
1.5 der Spreizdübel in seinem Zwischenabschnitt (9) einen geschlossenen Umfang aufweist und dadurch in dem Zwischenabschnitt (9) wasserdicht ausgebildet ist.

2. Spreizdübel nach Anspruch 1, bei dem der Spreizdübel in seinem Zwischenabschnitt (9) die gleiche Ausbildung aufweist wie ein üblicher Spreizbereich, wobei jedoch die die Spreizung ermöglichenden Öffnungen in diesem Zwischenbereich durch ein dünnes Material verschlossen sind, das beim Aufspreizen des Dübels nachgibt.

3. Spreizdübel nach Anspruch 1 oder 2, bei dem der Spreizdübel in seinem Zwischenabschnitt (9) die gleiche Ausbildung aufweist wie ein üblicher Spreizbereich, wobei die das Spreizen ermöglichenden Öffnungen durch flexibles Material verschlossen sind, das sich beim Spreizen des Zwischenabschnitts entfaltet und/oder dehnt.

4. Spreizdübel nach einem der vorhergehenden Ansprüche, bei dem der Spreizdübel in seinem Zwischenabschnitt (9) die gleiche Ausbildung aufweist wie in seinem Spreizbereich (4).

5. Spreizdübel nach einem der Ansprüche 2 bis 4, bei dem das die Öffnungen des Zwischenabschnitts (9) verschließende Material das gleiche Material ist wie der Rest des Zwischenabschnitts (9).

6. Spreizdübel nach einem der Ansprüche 2 bis 4, bei dem das die Öffnung des Zwischenabschnitts (9) verschließende Material ein anderes Material ist als der Rest des Zwischenabschnitts.

7. Spreizdübel nach einem der vorhergehenden Ansprüche, bei dem der Dübel in seinem Spreizbereich (4) und/oder in seinem Zwischenabschnitt (9) mindestens zwei durch Längsschlitze (22) geteilte Spreizschenkel (23) ggf. mit einer Verrippung an ihrer Außenseite aufweist.

8. Spreizdübel nach einem der vorhergehenden Ansprüche, bei dem der Dübel in seinem Spreizbereich (4) und/oder in seinem Zwischenabschnitt (9) einzelne aus der Kontur des Dübels heraus bewegbare Spreizelemente (5) aufweist.

9. Spreizdübel nach Anspruch 8, bei dem die Spreizelemente (5) Dreieckform aufweisen und längs ihrer einen Seite einstückig an dem Dübel angeformt sind.

10. Spreizdübel nach einem der vorhergehenden Ansprüche, mit zwei Setztiefenmarkierungen (27, 28).

## Claims

1. Expansion plug made of plastic with
1.1 a sleeve section (3) which is arranged at the end of the expansion plug and which
1.1. when the expansion plug is applied is essentially arranged fully outside the masonry,
1.2 a forward expansion section (4) which
1.2.1 when the expansion plug is applied is essentially arranged fully within the masonry, as well as with
1.3 an intermediate section (9) which is arranged between the sleeve section (3) and the forward expansion section (4) and which is
1.3.1 designed in such a way that it can function as an expansion section as well as be arranged outside the masonry, **characterised in that**
1.4 the expansion plug has a metal expansion element, which when the expansion plug is applied is provided in the area of is intermediate section (9) with a corrosion-resistant coating, more particularly a zinc lamella coating, and/or
1.5 in its intermediate section (9) the expansion plug has a closed circumference and is thereby watertight in the intermediate section (9).

2. Expansion plug in accordance with claim 1 in which in its intermediate section (9) the expansion plug is designed in the same way as a conventional expansion section, whereby, however, the openings making expansion possible are, in this intermediate section, closed with a thin material which yields when the plug expands.

3. Expansion plug in accordance with claim 1 or 2 in which in its intermediate section (9) the expansion plug is designed in the same way as a conventional expansion section, whereby the openings making expansion possible are closed by flexible material which unfolds and/or expands on expansion of the intermediate section.

4. Expansion plug in accordance with any one of the preceding claims in which in its intermediate section (9) the expansion plug is designed in the same way as in its expansion section (4).

5. Expansion plug in accordance with any one of the claims 2 to 4 in which the material closing the openings of the intermediate section (9) is the same material as the remainder of the intermediate section (9).

6. Expansion plug in accordance with any one of claims 2 to 4 in which the material closing the openings in the intermediate section (9) is a material that is different from the remainder of the intermediate section.

7. Expansion plug in accordance with any one of the preceding claims in which in its expansion section (4) and/or in its intermediate section (9) the plug has at least two expansion arms (23), separated by longitudinal slits (22), and possibly with ribbing on their outer side.

8. Expansion plug in accordance with any one of the preceding claims in which in its expansion section (4) and/or its intermediate section (9) the plug has individual expansion elements (5) which can be moved out from the contour of the plug.

9. Expansion plug in accordance with claim 8 in which the expansion elements (5) are triangular in shape and are moulded onto the plug in one piece along one of their sides.

10. Expansion plug in accordance with any one of the preceding claims with two depth setting markings (27, 28) .

## Revendications

1. Cheville à expansion, avec
1.1 une section de manchon (3) disposée à l'extrémité de la cheville, qui
1.1.1 est disposée quasiment entièrement à l'extérieur de la maçonnerie dans l'état monté de la cheville,
1.2 une région d'expansion avant (4), qui
1.2.1 est disposée quasiment entièrement à l'intérieur de la maçonnerie dans l'état monté de la cheville, ainsi qu'avec
1.3 une section intermédiaire (9) disposée entre la section de manchon (3) et la région d'expansion avant (4), qui
1.3.1 est conçue de manière à pouvoir d'une part agir comme région d'expansion et d'autre part être disposée à l'extérieur de la maçonnerie, **caractérisée en ce que**
1.4 la cheville à expansion comporte un élément d'expansion métallique qui, dans l'état monté de la cheville, est pourvu d'un revêtement résistant à la corrosion dans la région de la section intermédiaire (9), en particulier d'un revêtement en lamelles de zinc, et/ou
1.5 la cheville à expansion présente un pourtour fermé dans sa section intermédiaire (9), ce qui le rend étanche à l'eau dans la section intermédiaire (9).

2. Cheville à expansion selon la revendication 1, dans laquelle la cheville à expansion présente une section intermédiaire (9) de la même forme qu'une région d'expansion ordinaire, et dans laquelle les ouvertures permettant l'expansion dans cette région intermédiaire sont cependant fermées par un matériau fin, qui se relâche lors de l'expansion de la cheville.

3. Cheville à expansion selon la revendication 1 ou 2, dans laquelle la cheville à expansion présente une section intermédiaire (9) de la même forme qu'une région d'expansion ordinaire, et dans laquelle les ouvertures permettant l'expansion sont cependant fermées par un matériau souple qui se déploie et/ou se détend lors de l'expansion.

4. Cheville à expansion selon l'une des revendications précédentes, dans laquelle la cheville à expansion présente une section intermédiaire (9) de la même forme que sa région d'expansion (4) .

5. Cheville à expansion selon l'une des revendications 2 à 4, dans laquelle le matériau fermant les ouvertures de la section intermédiaire (9) est le même matériau que pour le reste de la section intermédiaire (9).

6. Cheville à expansion selon l'une des revendications 2 à 4, dans laquelle le matériau fermant l'ouverture de la section intermédiaire (9) est un autre matériau que pour le reste de la section intermédiaire.

7. Cheville à expansion selon l'une des revendications précédentes, dans laquelle la cheville comporte au moins deux branches d'expansion (23) divisées par au moins deux fentes longitudinales (22), éventuellement nervurées de leur côté extérieur, dans sa région d'expansion (4) et/ou dans sa section intermédiaire (9).

8. Cheville à expansion selon l'une des revendications précédentes, dans laquelle la cheville comporte des éléments d'expansion (5) séparés, déplaçables au-delà du contour de la cheville, dans sa région d'expansion (4) et/ou dans sa section intermédiaire (9).

9. Cheville à expansion selon la revendication 8, dans laquelle les éléments d'expansion (5) présentent une forme triangulaire et sont formés d'une seule pièce avec la cheville le long d'un de leurs côtés.

10. Cheville à expansion selon l'une des revendications précédentes, avec deux repères de profondeur de montage (27, 28).
